# EUROPEAN PATENT APPLICATION

(11) **EP 4 283 812 A1**
(43) Date of publication of application: **29.11.2023**
(21) Application number: 22201124.9
(22) Date of filing: 12.10.2022
(51) Int. Cl.: H02J 3/14, B60L 53/63, B60L 53/67, H02J 3/38, H02J 7/00

(54) **CHARGING LOCATION SELECTION OF AN INCOMING ELECTRIC VEHICLE FOR LARGE EV DEPOT INFRASTRUCTURE**

(30) Priority: 27.05.2022 US 202217826432
(71) Applicant: Hitachi Energy USA Inc., Raleigh, NC 27606 (US)
(72) Inventor: HAFIZ, Faeza, Raleigh, 27606 (US); ISHCHENKO, Dmitry, Cary, 27518 (US); ALMALECK, Pablo, 16136 Genova (IT)
(74) Representative: Vossius & Partner Patentanwälte Rechtsanwälte mbB

(57) **Abstract**

As the use of renewable energy resources increases within charging infrastructures, the risk that charging an additional load within the charging infrastructure will create a violation of the applicable grid code also increases. In an embodiment, a charging location is selected for an incoming load based on a load flow analysis, to thereby mitigate the risk of a violation. This selection process may also account for the charging schedule of the load and the capacity of available charging stations (e.g., fast charging vs. slow charging).

## Description

### GOVERNMENT LICENSE RIGHTS

This invention was made with U.S. Government support under Contract No. DOE-OE0000896 awarded by the Department of Energy. The U.S. Government has certain rights in this invention.

### BACKGROUND

### Field of the Invention

The embodiments described herein are generally directed to energy management systems, and, more particularly, to the selection of a charging location for a flexible load, such as an electric vehicle (EV), within a charging infrastructure, such as an EV depot.

### Description of the Related Art

There has been an increase in the deployment of EV charging stations as a result of increasing EV usage, in an effort to reduce greenhouse emissions. An EV depot may include a distribution network comprising multiple EV charging stations, auxiliary loads, and distributed energy resources (DERs), including energy storage. Each EV charging station comprises one or a plurality of chargers configured to deliver electricity to connected electric vehicles (e.g., buses, automobiles, utility trucks, etc.).

The distribution network may be managed by an energy management system (EMS), which is generally configured to reduce the costs of electricity consumption. The distribution network should maintain a certain level of voltage and current, in order to avoid violations of applicable grid code(s). Such violations may impact the connected loads, as well as the stability of the grid to which the distribution network is connected. The likelihood of a violation increases when distributed energy resources are integrated into the EV depot.

When the distributed energy resources include renewable energy resources (e.g., a solar power generator, wind power generator, geothermal power generator, hydroelectric power generator, fuel cell, etc.), the energy management system generally prefers to utilize maximum power generation from the renewable energy resources, since renewable energy resources have a lower unit cost. However, as the usage of renewable energy resources increases, the probability of violations, such as over-voltage, in the distribution network, also increases. In addition, as the EV load increases, the probability of violations, such as under-voltage, in the distribution network, also increases.

In the distribution networks of existing EV depots, electric vehicles are typically scheduled for charging based on a first-in-first-serve approach or based on the EV charging types required by the electric vehicles. These conventional approaches may result in violations of the applicable grid code by the distribution network. In turn, these violations may result in penalties and, potentially, the collapse of the distribution network.

### SUMMARY

Accordingly, systems, methods, and non-transitory computer-readable media are disclosed for a new approach to the selection of a charging location for a flexible load within a charging infrastructure. An objective of embodiments is to select a charging location for a flexible load within a load distribution network based on the charging schedule of the flexible load. A further objective of embodiments is to use load flow analysis, during selection of the charging location, to reduce the likelihood of a voltage violation during charging of the flexible load. Another objective of embodiments is to account for the capacity of charging stations during the selection of the charging location.

In an embodiment, a method comprises using at least one hardware processor to, for at least one flexible load to be charged in a distribution network comprising a plurality of nodes, wherein each of the plurality of nodes comprises one or more charging stations: determine a charging time period associated with the flexible load; execute a load flow analysis on a model of the distribution network, based on a power schedule for existing loads to be charged in the distribution network during the charging time period; based on a result of the load flow analysis, determine a charging station at one of the plurality of nodes within the distribution network at which to the charge the flexible load; and schedule the flexible load to be charged at the determined charging station during the charging time period.

The method may further comprise using the at least one hardware processor to control the determined charging station during the charging time period to output power to the flexible load.

The flexible load may be an electric vehicle, and the distribution network may comprise a charging depot for electric vehicles.

The result of the load flow analysis may comprise an indication of whether or not a voltage violation will occur. The voltage violation may be a violation of a grid code that defines voltage requirements that the distribution network must satisfy.

The method may further comprise using the at least one hardware processor to, when the result of the load flow analysis indicates that a violation will occur, exclude any of the plurality of nodes, at which the violation will occur, from the determination of the charging station at which to charge the flexible load. The violation may comprise an under-voltage.

Determining the charging time period may comprise: receiving a schedule associated with the flexible load; and deriving the charging time period from the schedule associated with the flexible load. The flexible load may be an electric vehicle, and the distribution network may comprise a charging depot for electric vehicles, wherein the schedule associated with the electric vehicle comprises a time by which the electric vehicle is scheduled to depart from the charging depot.

Determining the charging station at which to charge the flexible load may comprise: determining whether or not the flexible load requires fast charging based on the charging time period; and, based on the determination of whether or not the flexible load requires fast charging, selecting a charging station as the determined charging station. Selecting the charging station may comprise, when determining that the flexible load requires fast charging: determining whether or not at least one fast charging station is available during the charging time period; and, when determining that at least one fast charging station is available during the charging time period, select a fast charging station, from the at least one fast charging station that is available during the charging time period, as the determined charging station. Selecting the fast charging station may comprise, when a plurality of fast charging stations are available at two or more of the plurality of nodes, select the fast charging station, at one of the two or more nodes with a highest voltage among the two or more nodes, as the determined charging station. Selecting the charging station may further comprise, when determining that no fast charging station is available during the charging time period, selecting a charging station, at one of the plurality of nodes with a highest voltage among the plurality of nodes within the load flow analysis, as the determined charging station. Selecting the charging station may comprise, when determining that the flexible load does not require fast charging, selecting a charging station, at one of the plurality of nodes with a highest voltage among the plurality of nodes within the load flow analysis, as the determined charging station.

The distribution network may comprise one or more distributed energy resources, wherein determining the charging station at which to charge the flexible load comprises, in each of one or more iterations, until determining that a violation will not occur, selecting one of the plurality of nodes at which to charge the flexible load, wherein a different one of the plurality of nodes is selected in each iteration; executing an economic dispatch for the distribution network; executing the load flow analysis on the model of the distribution network, based on the power schedule for existing loads to be charged in the distribution network during the charging time period and charging of the flexible load at the selected node; and determining whether or not the violation will occur based on the load flow analysis. The violation may comprise an under-voltage at the selected node. The power schedule may comprise setpoints for one or more of the plurality of nodes in the distribution network, and the load flow analysis may be performed for each of the setpoints in the power schedule. The one or more distributed energy resources may comprise one or more of a photovoltaic power generator, a wind power generator, a fuel cell, a thermal power plant, a hydroelectric power plant, a gasoline-powered generator, or a battery.

It should be understood that any of the features in the methods above may be implemented individually or with any subset of the other features in any combination. Thus, to the extent that the appended claims would suggest particular dependencies between features, disclosed embodiments are not limited to these particular dependencies. Rather, any of the features described herein may be combined with any other feature described herein, or implemented without any one or more other features described herein, in any combination of features whatsoever. In addition, any of the methods, described above and elsewhere herein, may be embodied, individually or in any combination, in executable software modules of a processorbased system, such as a server, and/or in executable instructions stored in a non-transitory computer-readable medium.

### BRIEF DESCRIPTION OF THE DRAWINGS

The details of the present invention, both as to its structure and operation, may be gleaned in part by study of the accompanying drawings, in which like reference numerals refer to like parts, and in which:
FIG. 1 illustrates an example infrastructure, in which one or more of the processes described herein, may be implemented, according to an embodiment;
FIG. 2 illustrates an example processing system, by which one or more of the processes described herein, may be executed, according to an embodiment;
FIG. 3 illustrates an example distribution network, according to an embodiment; and
FIG. 4 illustrates a process for selecting a charging location for a flexible load within a distribution network, according to an embodiment.

### DETAILED DESCRIPTION

In an embodiment, systems, methods, and non-transitory computer-readable media are disclosed for selecting a charging location for a flexible load, such as an electric vehicle, within a charging infrastructure, such as an EV depot. The term "flexible load" refers to any load that requires occasional charging (e.g., of an on-board battery) and is capable of being charged at any of a plurality of different locations within the distribution network of a charging infrastructure. A flexible load may require charging according to a flexible or inflexible schedule. In other words, the term "flexible load" implies flexibility in charging location, rather than flexibility in scheduling or any other characteristic. While it is generally contemplated that the flexible load will be an electric vehicle and the charging infrastructure will be an EV depot, the disclosed approach is not limited to electric vehicles in EV depots. Rather, the disclosed approach may be applied to any flexible load within any type of distribution network. Alternative examples of flexible loads include, without limitation, drones, robotic systems, mobile devices, mobile machines, power tools, and the like, and a single charging infrastructure may be configured to charge one or a plurality of types of flexible loads. As used herein, the term "distribution network" refers to the interconnection of electrical components within the charging infrastructure (e.g., EV depot) that distribute power to the flexible loads. These electrical components primarily include distributed energy resources and charging stations, which can be thought of as the "nodes" of the distribution network, and electrical connections, which can be thought of as the "edges" connecting nodes within the distribution network. The disclosed approach may be based on the voltage ranges of nodes within the distribution network, the charging schedules of the flexible loads, the capacities of the charging stations, the energy management of existing distributed energy resources in the distribution network, and/or the like, to thereby prevent or reduce the violation of applicable grid code(s).

After reading this description, it will become apparent to one skilled in the art how to implement the invention in various alternative embodiments and alternative applications. However, although various embodiments of the present invention will be described herein, it is understood that these embodiments are presented by way of example and illustration only, and not limitation. As such, this detailed description of various embodiments should not be construed to limit the scope or breadth of the present invention as set forth in the appended claims.

### 1. System Overview

### 1.1. Infrastructure

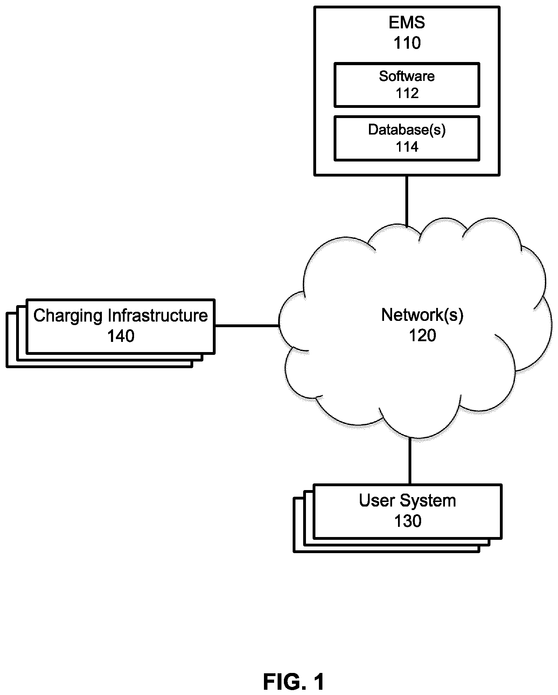

FIG. 1 illustrates an example infrastructure in which one or more of the disclosed processes may be implemented, according to an embodiment. The infrastructure may comprise an energy management system (EMS) 110 (e.g., comprising one or more servers) which hosts and/or executes one or more of the various functions, processes, methods, and/or software modules described herein. EMS 110 may comprise dedicated servers, or may instead be implemented in a computing cloud, in which the resources of one or more servers are dynamically and elastically allocated to multiple tenants based on demand. In either case, the servers may be collocated and/or geographically distributed. EMS 110 may also comprise or be communicatively connected to software 112 and/or one or more databases 114. In addition, EMS 110 may be communicatively connected to one or more user systems 130 and/or charging infrastructures 140 (e.g., EV depots) via one or more networks 120.

Network(s) 120 may comprise the Internet, and EMS 110 may communicate with user system(s) 130 and/or charging infrastructure(s) 140 through the Internet using standard transmission protocols, such as HyperText Transfer Protocol (HTTP), HTTP Secure (HTTPS), File Transfer Protocol (FTP), FTP Secure (FTPS), Secure Shell FTP (SFTP), eXtensible Messaging and Presence Protocol (XMPP), Open Field Message Bus (OpenFMB), IEEE Smart Energy Profile Application Protocol (IEEE 2030.5), and the like, as well as proprietary protocols. While EMS 110 is illustrated as being connected to various systems through a single set of network(s) 120, it should be understood that EMS 110 may be connected to the various systems via different sets of one or more networks. For example, EMS 110 may be connected to a subset of user systems 130 and/or charging infrastructures 140 via the Internet, but may be connected to one or more other user systems 130 and/or charging infrastructures 140 via an intranet. Furthermore, while only a few user systems 130 and charging infrastructures 140, one instance of software 112, and one set of database(s) 114 are illustrated, it should be understood that the infrastructure may comprise any number of user systems, charging infrastructures, software instances, and databases.

User system(s) 130 may comprise any type or types of computing devices capable of wired and/or wireless communication, including without limitation, desktop computers, laptop computers, tablet computers, smart phones or other mobile phones, servers, game consoles, televisions, set-top boxes, electronic kiosks, point-of-sale terminals, embedded controllers, programmable logic controllers (PLCs), and/or the like. However, it is generally contemplated that user system(s) 130 would comprise personal computers, mobile devices, or workstations by which agents of an operator of a charging infrastructure 140 can interact with EMS 110. These interactions may comprise inputting data (e.g., parameters for configuring one or more of the processes described herein) and/or receiving data (e.g., the outputs of one or more processes described herein) via a graphical user interface provided by EMS 110 or a system between EMS 110 and user system(s) 130. The graphical user interface may comprise screens (e.g., webpages) that include a combination of content and elements, such as text, images, videos, animations, references (e.g., hyperlinks), frames, inputs (e.g., textboxes, text areas, checkboxes, radio buttons, drop-down menus, buttons, forms, etc.), scripts (e.g., JavaScript), and the like, including elements comprising or derived from data stored in one or more databases (e.g., database(s) 114).

EMS 110 may execute software 112, comprising one or more software modules that implement one or more of the disclosed processes. In addition, EMS 110 may comprise, be communicatively coupled with, or otherwise have access to one or more database(s) 114 that store the data input into and/or output from one or more of the disclosed processes. Any suitable database may be utilized, including without limitation MySQL^{™}, Oracle^{™}, IBM^{™}, Microsoft SQL^{™}, Access^{™}, PostgreSQL^{™}, and the like, including cloud-based databases, proprietary databases, and unstructured databases.

### 1.2. Example Processing Device

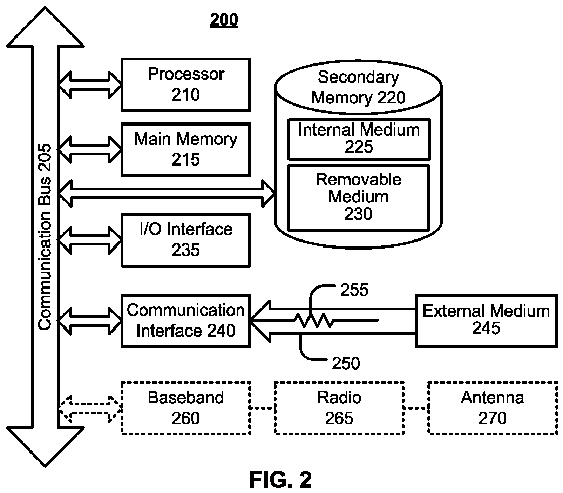

FIG. 2 is a block diagram illustrating an example wired or wireless system 200 that may be used in connection with various embodiments described herein. For example, system 200 may be used as or in conjunction with one or more of the functions, processes, or methods (e.g., to store and/or execute software 112) described herein, and may represent components of EMS 110, user system(s) 130, charging infrastructure(s) 140, and/or other processing devices described herein. System 200 can be a server or any conventional personal computer, or any other processorenabled device that is capable of wired or wireless data communication. Other computer systems and/or architectures may be also used, as will be clear to those skilled in the art.

System 200 preferably includes one or more processors 210. Processor(s) 210 may comprise a central processing unit (CPU). Additional processors may be provided, such as a graphics processing unit (GPU), an auxiliary processor to manage input/output, an auxiliary processor to perform floating-point mathematical operations, a special-purpose microprocessor having an architecture suitable for fast execution of signal-processing algorithms (e.g., digitalsignal processor), a processor subordinate to the main processing system (e.g., back-end processor), an additional microprocessor or controller for dual or multiple processor systems, and/or a coprocessor. Such auxiliary processors may be discrete processors or may be integrated with processor 210. Examples of processors which may be used with system 200 include, without limitation, any of the processors (e.g., Pentium^{™}, Core i7^{™}, Xeon^{™}, etc.) available from Intel Corporation of Santa Clara, California, any of the processors available from Advanced Micro Devices, Incorporated (AMD) of Santa Clara, California, any of the processors (e.g., A series, M series, etc.) available from Apple Inc. of Cupertino, any of the processors (e.g., Exynos^{™}) available from Samsung Electronics Co., Ltd., of Seoul, South Korea, and/or the like.

Processor 210 is preferably connected to a communication bus 205. Communication bus 205 may include a data channel for facilitating information transfer between storage and other peripheral components of system 200. Furthermore, communication bus 205 may provide a set of signals used for communication with processor 210, including a data bus, address bus, and/or control bus (not shown). Communication bus 205 may comprise any standard or non-standard bus architecture such as, for example, bus architectures compliant with industry standard architecture (ISA), extended industry standard architecture (EISA), Micro Channel Architecture (MCA), peripheral component interconnect (PCI) local bus, standards promulgated by the Institute of Electrical and Electronics Engineers (IEEE) including IEEE 488 general-purpose interface bus (GPIB), IEEE 696/S-100, and/or the like.

System 200 preferably includes a main memory 215 and may also include a secondary memory 220. Main memory 215 provides storage of instructions and data for programs executing on processor 210, such as one or more of the functions and/or modules discussed herein (e.g., software 112). It should be understood that programs stored in the memory and executed by processor 210 may be written and/or compiled according to any suitable language, including without limitation C/C++, Java, JavaScript, Perl, Visual Basic, .NET, and the like. Main memory 215 is typically semiconductor-based memory such as dynamic random access memory (DRAM) and/or static random access memory (SRAM). Other semiconductor-based memory types include, for example, synchronous dynamic random access memory (SDRAM), Rambus dynamic random access memory (RDRAM), ferroelectric random access memory (FRAM), and the like, including read only memory (ROM).

Secondary memory 220 may optionally include an internal medium 225 and/or a removable medium 230. Removable medium 230 is read from and/or written to in any well-known manner. Removable storage medium 230 may be, for example, a magnetic tape drive, a compact disc (CD) drive, a digital versatile disc (DVD) drive, other optical drive, a flash memory drive, and/or the like. Secondary memory 220 is a non-transitory computer-readable medium having computer-executable code (e.g., software 112) and/or other data stored thereon. The computer software or data stored on secondary memory 220 is read into main memory 215 for execution by processor 210.

In alternative embodiments, secondary memory 220 may include other similar means for allowing computer programs or other data or instructions to be loaded into system 200. Such means may include, for example, a communication interface 240, which allows software and data to be transferred from external storage medium 245 to system 200. Examples of external storage medium 245 may include an external hard disk drive, an external optical drive, an external magneto-optical drive, and/or the like. Other examples of secondary memory 220 may include semiconductor-based memory, such as programmable read-only memory (PROM), erasable programmable read-only memory (EPROM), electrically erasable read-only memory (EEPROM), and flash memory (block-oriented memory similar to EEPROM).

As mentioned above, system 200 may include a communication interface 240. Communication interface 240 allows software and data to be transferred between system 200 and external devices (e.g. printers), networks, or other information sources. For example, computer software or executable code may be transferred to system 200 from a network server (e.g., platform 110) via communication interface 240. Examples of communication interface 240 include a builtin network adapter, network interface card (NIC), Personal Computer Memory Card International Association (PCMCIA) network card, card bus network adapter, wireless network adapter, Universal Serial Bus (USB) network adapter, modem, a wireless data card, a communications port, an infrared interface, an IEEE 1394 fire-wire, and any other device capable of interfacing system 200 with a network (e.g., network(s) 120) or another computing device. Communication interface 240 preferably implements industry-promulgated protocol standards, such as Ethernet IEEE 802 standards, Fiber Channel, digital subscriber line (DSL), asynchronous digital subscriber line (ADSL), frame relay, asynchronous transfer mode (ATM), integrated digital services network (ISDN), personal communications services (PCS), transmission control protocol/Internet protocol (TCP/IP), serial line Internet protocol/point to point protocol (SLIP/PPP), and so on, but may also implement customized or non-standard interface protocols as well.

Software and data transferred via communication interface 240 are generally in the form of electrical communication signals 255. These signals 255 may be provided to communication interface 240 via a communication channel 250. In an embodiment, communication channel 250 may be a wired or wireless network (e.g., network(s) 120), or any variety of other communication links. Communication channel 250 carries signals 255 and can be implemented using a variety of wired or wireless communication means including wire or cable, fiber optics, conventional phone line, cellular phone link, wireless data communication link, radio frequency ("RF") link, or infrared link, just to name a few.

Computer-executable code (e.g., computer programs, such as software 112) is stored in main memory 215 and/or secondary memory 220. Computer programs can also be received via communication interface 240 and stored in main memory 215 and/or secondary memory 220. Such computer programs, when executed, enable system 200 to perform the various functions of the disclosed embodiments as described elsewhere herein.

In this description, the term "computer-readable medium" is used to refer to any non-transitory computer-readable storage media used to provide computer-executable code and/or other data to or within system 200. Examples of such media include main memory 215, secondary memory 220 (including internal memory 225 and/or removable medium 230), external storage medium 245, and any peripheral device communicatively coupled with communication interface 240 (including a network information server or other network device). These non-transitory computer-readable media are means for providing executable code, programming instructions, software, and/or other data to system 200.

In an embodiment that is implemented using software, the software may be stored on a computer-readable medium and loaded into system 200 by way of removable medium 230, I/O interface 235, or communication interface 240. In such an embodiment, the software is loaded into system 200 in the form of electrical communication signals 255. The software, when executed by processor 210, preferably causes processor 210 to perform one or more of the processes and functions described elsewhere herein.

In an embodiment, I/O interface 235 provides an interface between one or more components of system 200 and one or more input and/or output devices. Example input devices include, without limitation, sensors, keyboards, touch screens or other touch-sensitive devices, cameras, biometric sensing devices, computer mice, trackballs, pen-based pointing devices, and/or the like. Examples of output devices include, without limitation, other processing devices, cathode ray tubes (CRTs), plasma displays, light-emitting diode (LED) displays, liquid crystal displays (LCDs), printers, vacuum fluorescent displays (VFDs), surface-conduction electron-emitter displays (SEDs), field emission displays (FEDs), and/or the like. In some cases, an input and output device may be combined, such as in the case of a touch panel display (e.g., in a smartphone, tablet, or other mobile device).

System 200 may also include optional wireless communication components that facilitate wireless communication over a voice network and/or a data network (e.g., in the case of user system 130 that is a smart phone or other mobile device). The wireless communication components comprise an antenna system 270, a radio system 265, and a baseband system 260. In system 200, radio frequency (RF) signals are transmitted and received over the air by antenna system 270 under the management of radio system 265.

In an embodiment, antenna system 270 may comprise one or more antennae and one or more multiplexors (not shown) that perform a switching function to provide antenna system 270 with transmit and receive signal paths. In the receive path, received RF signals can be coupled from a multiplexor to a low noise amplifier (not shown) that amplifies the received RF signal and sends the amplified signal to radio system 265.

In an alternative embodiment, radio system 265 may comprise one or more radios that are configured to communicate over various frequencies. In an embodiment, radio system 265 may combine a demodulator (not shown) and modulator (not shown) in one integrated circuit (IC). The demodulator and modulator can also be separate components. In the incoming path, the demodulator strips away the RF carrier signal leaving a baseband receive audio signal, which is sent from radio system 265 to baseband system 260.

If the received signal contains audio information, then baseband system 260 decodes the signal and converts it to an analog signal. Then the signal is amplified and sent to a speaker. Baseband system 260 also receives analog audio signals from a microphone. These analog audio signals are converted to digital signals and encoded by baseband system 260. Baseband system 260 also encodes the digital signals for transmission and generates a baseband transmit audio signal that is routed to the modulator portion of radio system 265. The modulator mixes the baseband transmit audio signal with an RF carrier signal, generating an RF transmit signal that is routed to antenna system 270 and may pass through a power amplifier (not shown). The power amplifier amplifies the RF transmit signal and routes it to antenna system 270, where the signal is switched to the antenna port for transmission.

Baseband system 260 is also communicatively coupled with processor(s) 210. Processor(s) 210 may have access to data storage areas 215 and 220. Processor(s) 210 are preferably configured to execute instructions (i.e., computer programs, such as the disclosed software) that can be stored in main memory 215 or secondary memory 220. Computer programs can also be received from baseband processor 260 and stored in main memory 210 or in secondary memory 220, or executed upon receipt. Such computer programs, when executed, enable system 200 to perform the various functions of the disclosed embodiments.

### 1.3. Example Charging Infrastructure

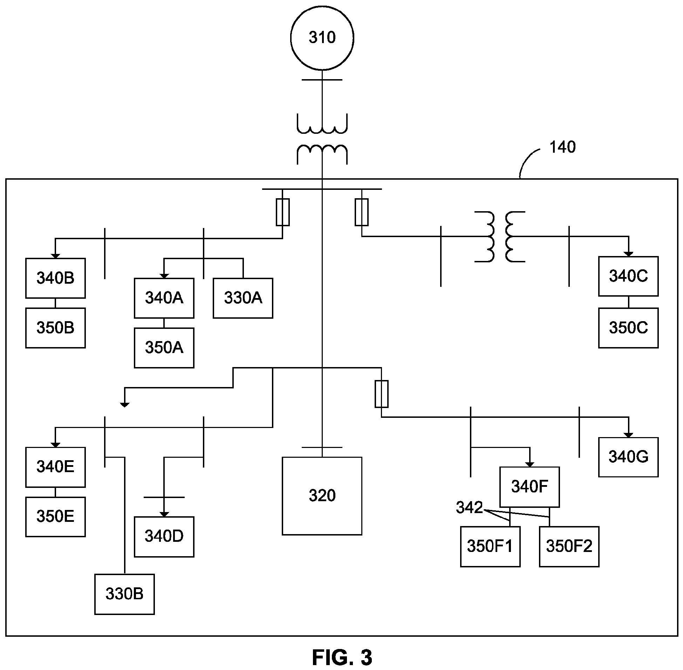

FIG. 3 illustrates a one-line diagram of an example distribution network of an example charging infrastructure 140, according to an embodiment. As an example, charging infrastructure 140 may be an EV depot for charging electric vehicles as the flexible loads. Charging infrastructure 140 is connected to a power grid 310, from which electricity may be purchased. The purchase cost of electricity may vary throughout each day (e.g., higher during the day than at night) and across days (e.g., higher on summer days than winter days), according to a time-of-use (ToU) rate. The ToU rate may assign peak rates, partial-peak rates, and off-peak rates to various time periods (e.g., each hourly interval in a day), representing the cost of electricity during those time periods.

Charging infrastructure 140 may comprise one or a plurality of distributed energy resources, including, for example, one or a plurality of battery energy storage (BES) systems 320 and/or one or a plurality of power generators 330, illustrated as power generators 330A and 330B. Power generator(s) 330 may comprise renewable energy resources (e.g., solar power generator, wind power generator, geothermal power generator, hydroelectric power generator, fuel cell, etc.) and/or non-renewable energy resources (e.g., diesel generator, natural gas generator, etc.). For example, power generator 330A may be a solar power generator comprising a plurality of photovoltaic cells that convert sunlight into electricity, and power generator 330B may be a diesel generator that burns diesel gasoline to produce electricity.

Charging infrastructure 140 also comprises a distribution network comprising a plurality of nodes, and potentially one or more auxiliary loads. Each node may comprise or consist of a charging station 340, illustrated as charging stations 340A, 340B, 340C, 340D, 340E, 340F, and 340G. Each charging station 340 may comprise one or a plurality of chargers 342. For example, charging station 340F is illustrated with two chargers 342. Each charger 342 is configured to be electrically connected to a flexible load 350, so as to supply electricity to one or more batteries of the flexible load 350. At any given time, some chargers 342 may be connected to a flexible load 350, whereas other chargers 342 may be unconnected to a flexible load 350 and available to receive an incoming flexible load 350. One or more charging stations 340 or individual chargers 342 may be configured to switch the power supply to a flexible load 350 on or off under the control of EMS 110 or another controller. For example, a charging station 340 and/or charger 342 may comprise a processing system 200 that receives commands from a controller (e.g., EMS 110) via communication interface 240, processes the commands using processor 210 and main memory 215, and controls an actuator (e.g., one or more switches) to switch the power supply on or off according to the processed commands. It should be understood that the distribution network of charging infrastructure 140 may also comprise types of loads, other than flexible loads 350, such as auxiliary loads for operating various functions of charging infrastructure 140. It should also be understood that each BES system 320 can function as both a power source (i.e., when discharging) and a load (i.e., when charging).

Parameters (e.g., voltage, current, etc.) of each node within the distribution network of charging infrastructure 140 may be monitored by EMS 110 and/or simulated by EMS 110 (e.g., during a load flow analysis). Thus, EMS 110 may monitor and/or simulate parameters of nodes within the distribution network, and control one or more components of charging infrastructure, such as charging station(s) 340, charger(s) 342, power generator(s) 330, BES system(s) 320, and/or the like, based on those parameters. This control may be performed periodically or in real time.

One or more charging stations 340 may comprise one or a plurality of chargers 342 that are capable of significantly faster charging relative to other chargers 342. There are a number of mechanisms for implementing fast charging, primarily centered around increasing wattage by increasing current and/or voltage in the electrical connection. It should be understood that the term "fast charging" or "fast-charging" refers to charging that is comparatively fast relative to overall (e.g., average) charging in charging infrastructure 140, whereas "slow charging" or "slow-charging" refers to charging that is comparatively slow relative to overall charging in charging infrastructure 140. Thus, a "fast charger" is a charger 342 that is capable of fast charging, whereas a "slow charger" is a charger 342 that is not capable of fast charging. EMS 110 may maintain a record (e.g., in database 114) of which charging stations 340 and/or chargers 342 of each charging infrastructure 140 are capable of fast-charging. One or more of the disclosed processes may utilize this record to determine which charging stations 340 and/or chargers 342 are fast charging, when selecting a charging location for a flexible load 350 which may need fast charging.

### 2. Process Overview

Embodiments of processes for selecting a charging location for a flexible load within a charging infrastructure will now be described in detail. It should be understood that the described processes may be embodied in one or more software modules that are executed by one or more hardware processors, for example, as software 112 executed by processor(s) 210 of EMS 110. The described processes may be implemented as instructions represented in source code, object code, and/or machine code. These instructions may be executed directly by hardware processor(s) 210, or alternatively, may be executed by a virtual machine or container operating between the object code and hardware processors 210. In addition, the disclosed software may be built upon or interfaced with one or more existing systems.

Alternatively, the described processes may be implemented as a hardware component (e.g., general-purpose processor, integrated circuit (IC), application-specific integrated circuit (ASIC), digital signal processor (DSP), field-programmable gate array (FPGA) or other programmable logic device, discrete gate or transistor logic, etc.), combination of hardware components, or combination of hardware and software components. To clearly illustrate the interchangeability of hardware and software, various illustrative components, blocks, modules, circuits, and steps are described herein generally in terms of their functionality. Whether such functionality is implemented as hardware or software depends upon the particular application and design constraints imposed on the overall system. Skilled persons can implement the described functionality in varying ways for each particular application, but such implementation decisions should not be interpreted as causing a departure from the scope of the invention. In addition, the grouping of functions within a component, block, module, circuit, or step is for ease of description. Specific functions or steps can be moved from one component, block, module, circuit, or step to another without departing from the invention.

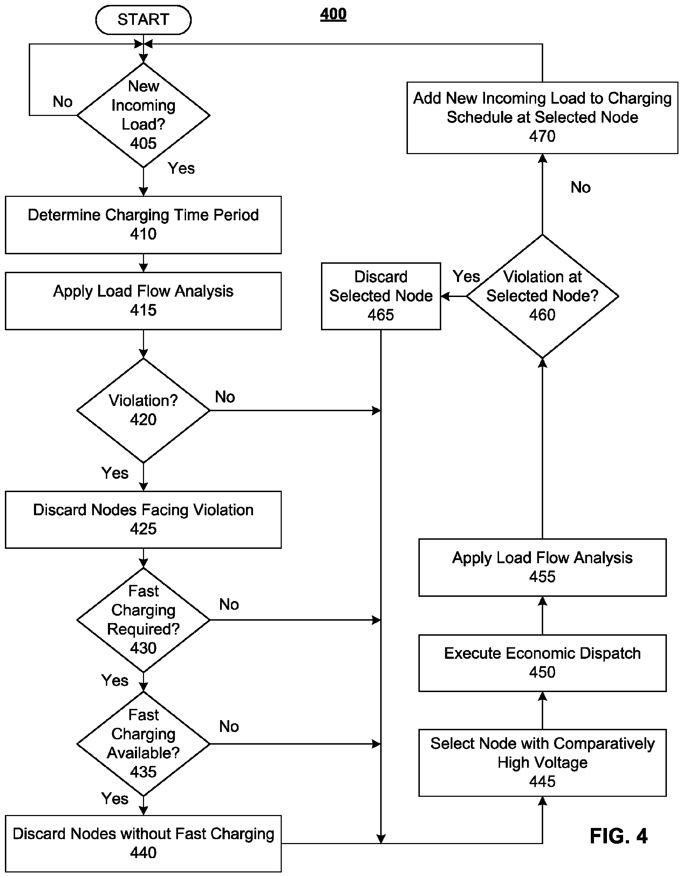

FIG. 4 illustrates a process 400 for selecting a charging location for a flexible load 350 (e.g., electric vehicle) within the distribution network of a charging infrastructure 140 (e.g., EV depot), according to an embodiment. Process 400 may be implemented as software 112, executed by one or more processors 210 of EMS 110. While process 400 is illustrated with a certain arrangement and ordering of subprocesses, process 400 may be implemented with fewer, more, or different subprocesses and a different arrangement and/or ordering of subprocesses. For example, process 400 may omit any one or more of the illustrated subprocesses, so as to comprise or consist of any subset of the illustrated subprocesses. In addition, any subprocess, which does not depend on the completion of another subprocess, may be executed before, after, or in parallel with that other independent subprocess, even if the subprocesses are described or illustrated in a particular order.

Process 400 may be executed as incoming flexible loads 350 need to be scheduled for charging. Thus, initially, in subprocess 405, process 400 awaits a request to schedule charging for a new incoming flexible load 350. This request may be received from another process (e.g., within the same EMS 110) or another system that manages the schedules or routes of flexible loads 350, a manual input via a graphical user interface (e.g., provided by EMS 110 or by flexible load 350), the flexible load 350 itself (e.g., a navigational system within and tracking the current route of an electric vehicle as flexible load 350), and/or the like. In an alternative embodiment, process 400 may be executed periodically (e.g., every fifteen minutes) on a batch of new incoming flexible loads 350, to be scheduled for charging, that have accumulated since the last execution of process 400. In either case, as long as there is no new incoming flexible load 350 (i.e., "No" in subprocess 405), process 400 may continue to wait. When there is a new incoming flexible load 350 (i.e., "Yes" in subprocess 405), process 400 may proceed to subprocess 410.

In subprocess 410, a charging time period, in which flexible load 350 is to be charged, may be determined from the schedule of the new incoming flexible load 350. This schedule may be received in the request in subprocess 405, stored in a database (e.g., 114) that is accessible to the system implementing process 400 (e.g., accessible to EMS 110), and/or retrieved from another system (e.g., via an API provided by that other system) The charging time period may be determined as the time period between the scheduled arrival of the new incoming flexible load 350 and the scheduled departure of the new incoming flexible load 350, or a portion of this time period (e.g., accounting for a buffer time period before and after charging). In other words, subprocess 410 may check the schedule of the new incoming flexible load 350, including the scheduled arrival time of the flexible load 350 at charging infrastructure 140 and the scheduled departure time of the flexible load 350 from charging infrastructure 140, and determine, as the charging time period, the time period available to charge flexible load 350 prior to its scheduled departure. In determining this time, subprocess 410 may also account for other considerations, such as whether the departure time is flexible (in which case, it may be moved back to increase the charging time period) or inflexible (in which case, it cannot be moved back, such that the charging time period is fixed), the charge level that the flexible load 350 will need by its departure (e.g., based on how far or long the flexible load 350 will need to travel before its next charge, as determined from its schedule), the expected charge level that the flexible load 350 will have at its arrival (e.g., based on its current charge level and remaining route), an expected delay between the arrival of the flexible load 350 and the start of charging, variability in the scheduled arrival time of the flexible load 350, and/or the like.

In subprocess 415, a load flow analysis is performed on an existing power schedule for distributed energy resources within charging infrastructure 140, given an existing charging schedule, to identify any violations (e.g., voltage violations, such as an over-voltage or under-voltage, current violations, etc.) during a relevant time period that comprises or consists of the charging time period determined in subprocess 410. The existing power schedule and/or charging schedule may be stored in a database (e.g., 114) that is accessible to the system implementing process 400 (e.g., accessible to EMS 110) and/or retrieved from another system (e.g., via an application programming interface (API) provided by that other system). The distribution network of charging infrastructure 140 may be modeled by a distribution-network model that represents each node in the distribution network. For example, an IEEE 13 bus system may be used for the distribution-network model. The load flow analysis may simulate the power schedule on the distribution-network model, during the relevant time period, to determine whether any nodes in the distribution network produce a violation during the simulation. For instance, the power schedule may comprise setpoints for the nodes in the distribution network, and the load flow analysis may be performed for each of the setpoints in the power schedule during the relevant time period. In particular, load flow analysis determines the operating steady state of each node in the distribution network for a given loading (e.g., derived from the charging schedule) in the power schedule during the relevant time period. The steady state of each node may be represented as a set of parameters, such as voltage, phase angle, real power, reactive power, and/or the like. Load flow analysis may solve for one or more of these parameters (e.g., voltage and phase angle) at each node in the distribution network, as represented in the distribution-network model, using a set of simultaneous algebraic power equations for the nodes in the distribution network, based on the real power and reactive power setpoints.

In subprocess 420, process 400 determines whether or not the result of the load flow analysis, applied in subprocess 415, comprises or indicates any violations. For example, an over-voltage violation may occur when the voltage in the steady state of a node exceeds a predefined threshold. Similarly, an under-voltage violation may occur when the voltage in the steady state of a node is less than a predefined threshold. Violations of other parameters, such as current, may be detected in a similar manner (e.g., using predefined thresholds). These predefined threshold(s) may be defined by a grid code, such as the IEEE 1547 standard for interconnection and interoperability of distributed energy resources with associated electric power systems. The IEEE 1547 defines an operating region for continuous voltage operation for its Abnormal Operating Performance Category III as having a lower bound of 0.88 per unit and an upper bound of 1.1 per unit. Thus, if IEEE 1547 is used for the grid code, a voltage above 1.1 per unit at a node would be determined as an over-voltage violation, and a voltage below 0.88 per unit at a node would be determined as an under-voltage violation. If any violation is detected (i.e., "Yes" in subprocess 420), process 400 proceeds to subprocess 425. Otherwise, if no violations are detected (i.e., "No" in subprocess 420), process 400 proceeds to subprocess 445. It should be understood that a violation may be detected (i.e., "Yes" in subprocess 420) when the result of the load flow analysis comprises a violation or otherwise indicates that a violation will occur, whereas no violations may be detected (i.e., "No" in subprocess 420) when the result of the load flow analysis does not comprise a violation or otherwise indicate that a violation will occur. In an embodiment, subprocess 420 may determine only whether or not the result of the load flow analysis comprises a particular violation, such as an under-voltage, while ignoring other types of violations, such as an over-voltage.

In subprocess 425, any nodes, at which a particular violation occurred during the load flow analysis in subprocess 415, as detected in subprocess 420, may be discarded from consideration. It should be understood that each node in the load flow analysis represents a particular charging station 340. In an embodiment, the only particular violation, for which nodes are discarded in subprocess 425, is an under-voltage at the charging station 340. In this embodiment, nodes at which an over-voltage occur are not discarded in subprocess 425. However, it should be understood that, in alternative embodiments, nodes may be discarded based on any violation of a grid code that indicates that a node may not be a suitable charging location for the new incoming flexible load 350.

Prior to subprocess 425, process 400 may initialize a list with all available nodes (i.e., charging stations 340). This list may represent all available nodes from which the charging location for the new incoming flexible load 350 may be selected. In subprocess 425, nodes for which a violation occurred during the load flow analysis in subprocess 415, may be removed from this list, thereby preventing them from being selected as the charging location for the new incoming flexible load 350. In other words, only those nodes remaining in the list will be considered in subsequent subprocesses, and all other nodes will be excluded from the determination of a charging location for the new incoming flexible load 350. It should be understood that this is simply one implementation of how the set of possible charging locations may be filtered or narrowed during process 400, and that equally suitable alternative implementations are possible.

In subprocess 430, process 400 determines whether the new incoming flexible load 350 requires fast charging. If the charging time period, determined in subprocess 410, is too short for the new incoming flexible load 350 to be charged to a required level with slow charging, subprocess 430 may determine that the new incoming flexible load 350 requires fast charging. Otherwise, if the charging time period, determined in subprocess 410, is sufficient for the new incoming flexible load 350 to be charged to the required level with slow charging, subprocess 430 may determine that the new incoming flexible load 350 does not require fast charging. For example, if the charging time period does not satisfy (e.g., is less than) a predefined threshold, subprocess 430 may determine that fast charging is required (i.e., "Yes" in subprocess 430) and proceed to subprocess 435. Otherwise, if the charging time period satisfies (e.g., is greater than or equal to) the predefined threshold, subprocess 430 may determine that fast charging is not required (i.e., "No" in subprocess 430, indicating that slow charging is sufficient) and proceed to subprocess 445.

In subprocess 435, process 400 determines whether any fast chargers are available. The charging schedule may indicate which chargers 342 are being used (from which the unused chargers 342 may be derived) and/or which chargers 342 are not being used. Thus, subprocess 435 may analyze the charging schedule to determine whether there are any unused fast chargers 342 (i.e., that are capable of fast charging) available during a sufficient time period, within the charging time period, to charge the new incoming flexible load 350 to a sufficient charge level prior to its departure. If such a fast charger is available (i.e., "Yes" in subprocess 435), process 400 may proceed to subprocess 440. Otherwise, if such a fast charger is not available (i.e., "No" in subprocess 435), process 400 may proceed to subprocess 445.

In subprocess 440, any nodes which do not have an available fast charger, as determined as a requirement in subprocess 435, may be discarded from consideration. For example, in an implementation using a list of available nodes, those nodes without such a fast charger may be removed from the list, thereby preventing them from being selected as the charging location for the new incoming flexible load 350. In other words, nodes that do not have fast chargers available will be excluded from the determination of the charging location for the new incoming flexible load 350.

In subprocess 445, the node with a comparatively high voltage, during the preceding load flow analysis, among remaining nodes under consideration, may be selected as the charging location for the new incoming flexible load 350. In an implementation that uses a list of available nodes, the remaining nodes under consideration would be those remaining in the list at the time that subprocess 445 is executed. In an embodiment, subprocess 445 selects the node with the highest voltage, during the most recent load flow analysis, among remaining nodes under consideration. Alternatively, subprocess 445 may select the node with the highest voltage, during the most recent load flow analysis, among nodes that satisfy one or more other criteria (e.g., connector type, sufficient space to accommodate flexible load 350, etc.). It should be understood that a node having a higher voltage during the load flow analysis generally means that the node is servicing less load than a node having a lower voltage during the load flow analysis. Thus, in general, charging the new incoming flexible load 350 at the node with the higher voltage will minimize the likelihood of an under-voltage violation in the distribution network of charging infrastructure 140.

In subprocess 450, an economic dispatch is executed for the relevant time period, comprising or consisting of the charging time period, based on the charging schedule, modified by the addition of the new incoming flexible load 350 being charged at the scheduled time and at the node selected in subprocess 445. The economic dispatch may be implemented as a software application that is integrated into the software implementing the other subprocesses of process 400. Alternatively, the economic dispatch may be implemented as a software application that is separate from the software implementing one or more other subprocesses of process 400 and provides its output (e.g., to subprocess 455) via an API. For example, the modified charging schedule may be pushed through an API of the software implementing subprocess 450, or alternatively, may be pulled through an API by the software implementing subprocess 450.

Economic dispatch refers to the allocation of electricity demand from loads (e.g., flexible loads 350) to distributed energy resources (e.g., BES systems 320 and/or power generators 330), in order to achieve the most economical usage of electricity. Typically, an economic dispatch is formulated as an optimization problem in which the objective is to minimize the purchase cost of electricity from grid 310. The basic idea is to prioritize the use of distributed energy resources with lower marginal costs over the use of distributed energy resources with higher marginal costs and grid 310.

In an embodiment, the economic dispatch is performed for the relevant time period that includes the charging time period of the new incoming flexible load 350 based on a charging schedule that covers at least the relevant time period and includes charging the new incoming flexible load 350 at the scheduled time and at the node selected in subprocess 445. The charging schedule may comprise, for each of one or a plurality of flexible loads 350 to be charged within the relevant time period, a location (e.g., node/charging station 340 and/or charger 342), a time at which charging of the flexible load 350 is scheduled to begin, a duration over which the flexible load 350 is scheduled to be charged, an amount of charge to be supplied to the flexible load 350 and/or a charge level to which the flexible load 350 is to be charged (e.g., to have sufficient charge to complete a scheduled route), a time by which the flexible load 350 must be charged (e.g., to complete the route as scheduled), and/or the like. The charging schedule may be updated periodically (e.g., every fifteen minutes) to reflect the current or expected status of each flexible load 350. It should be understood that the charging schedule may comprise a schedule for more than one time period to be considered (e.g., all future time periods for which charging has been scheduled), as long as it includes the schedule for the relevant time period during which the new incoming flexible load 350 is to be charged.

The economic dispatch in subprocess 450 may generate a power schedule that specifies the power to be output from each of the distributed energy resource(s) (e.g., BES systems 310 and/or power generators 330) in charging infrastructure 140 during the relevant time period under consideration, in order to satisfy flexible loads 350 in the charging schedule for the relevant time period under consideration, including charging of the new incoming flexible load 350 at the node selected in subprocess 445, while minimizing the cost of electricity during the relevant time period under consideration. The power schedule may comprise, for each distributed energy resource to be used during the relevant time period under consideration, an identity of the distributed energy resource, a time span during which the distributed energy resource is scheduled to output power (e.g., discharged from a BES system 320 or generated by a power generator 330), an amount of power to be output by the distributed energy resource, one or more setpoints of the distributed energy resource, and/or the like. During execution, the economic dispatch may consider equality constraints (e.g., power balance, state of charge balance of flexible loads 350, etc.) and inequality constraints (e.g., maintaining loads at a certain value at the point of common coupling, maintaining threshold levels of the state of charge of flexible loads 350, preconditioning flexible loads 350, availability of flexible loads 350, etc.).

In subprocess 455, a load flow analysis is performed on the power schedule that has been produced by the economic dispatch in subprocess 450, given the charging schedule, as modified with the charging of the new incoming flexible load 350 at the node selected in subprocess 445, for the relevant time period, comprising or consisting of the charging time period determined in subprocess 410. The load flow analysis in subprocess 455 may be similar or identical to the load flow analysis in subprocess 415, except that the charging schedule has been modified to account for the charging of the new incoming flexible load 350 at the node selected in subprocess 445, and the power schedule has been updated by the economic dispatch in subprocess 450. Thus, any description of the load flow analysis with respect to subprocess 415 applies equally to the load flow analysis in subprocess 455.

In subprocess 460, process 400 determines whether or not the result of the load flow analysis, applied in subprocess 455, comprises or indicates a particular violation at the node selected as the charging location for the new incoming flexible load 350 in subprocess 445. In particular, subprocess 460 may determine whether or not an under-voltage occurred at the selected node during the load flow analysis. An under-voltage at the selected node may indicate that the selected node is not suitable to charge the new incoming flexible load 350 during the scheduled time. Conversely, no under-voltage at the selected node may indicate that the selected node is suitable to charge the new incoming flexible load 350 during the scheduled time. Thus, if the particular violation is detected at the selected node (i.e., "Yes" in subprocess 460), process 400 proceeds to subprocess 465. Otherwise, if the particular violation is not detected at the selected node (i.e., "No" in subprocess 460), process 400 proceeds to subprocess 470. It should be understood that a violation may be detected (i.e., "Yes" in subprocess 460) when the result of the load flow analysis comprises an under-voltage violation or otherwise indicates that an under-voltage will occur at the selected node, whereas no violations may be detected (i.e., "No" in subprocess 460) when the result of the load flow analysis does not comprise an under-voltage violation or otherwise indicate that an under-voltage violation will occur at the selected node. While the example of an under-voltage violation is used as the particular violation detected in subprocess 460, it should be understood that, in an alternative embodiment, any violation of a grid code that indicates that the selected node may not be a suitable charging location for the new incoming flexible load 350 may be detected in subprocess 460.

In subprocess 465, the selected node, which faces the particular violation (e.g., under-voltage) as determined in subprocess 460, is discarded from consideration. For example, in an implementation using a list of available nodes, the node, selected in the preceding iteration of subprocess 445, may be removed from the list, thereby preventing that node from being selected again as the charging location for the new incoming flexible load 350. In other words, the node will be excluded from the determination of the charging location for the new incoming flexible load 350. Thus, process 400 may return to subprocess 445 to select a different available node.

In some cases, the list of available nodes may become empty, such that there are no nodes remaining for selection in subprocess 445. Process 400 may address such a scenario by initiating an exception handling process or other mechanism. For example, an exception handling process may modify the existing charging schedule to move loads 350 with flexible charging times to different charging times in order to free up charging stations 340 during the charging time period for the new incoming flexible load 350, move flexible load 350 that are scheduled for a fast charger, but do not need fast charging, to a slow charger in order to free up a fast charger for the new incoming flexible load 350, reroute the new incoming flexible load 350 or another flexible load 350 in the charging schedule to another charging infrastructure 140 (e.g., under management of the same EMS 110), relax the requirement of fast charging for the new incoming flexible load 350 (i.e., if fast charging would otherwise be determined as required in subprocess 430), select a node with the least likelihood of an under-voltage violation for the new incoming flexible load 350 in the event that the load flow analysis in subprocess 455 predicts an under-voltage violation at all possible nodes, and/or the like.

In subprocess 470, once a node has been selected that does not produce any violations detected by the load flow analysis in subprocess 455, charging of the new incoming flexible load 350 at the node selected in the most recent iteration of subprocess 445 is added to the existing charging schedule. This final charging schedule may be used to schedule the various loads, including flexible load 350, within the reelvant time period. In addition, the final power schedule, output by the most recent iteration of the economic dispatch in subprocess 450, may be used for scheduling power output by distributed energy resources (e.g., BEM system(s) 320, power generator(s) 330, etc.) during the relevant time period. The final charging schedule and/or the final power schedule may be used to inform control decisions during the relevant time period.

In an embodiment, the final charging schedule is used to route flexible loads 350. For example, an EMS 110 or another system may generate textual, visual, and/or navigational commands to route an electric vehicle, as the flexible load 350, to the scheduled EV depot, as the charging infrastructure 140, the scheduled charging station 340 and/or charger 342 within the EV depot 140, and/or other scheduled destination. In particular, the commands may be provided to a console within the electric vehicle to display visual aids that guide a driver of the electric vehicle to the scheduled destination. In the case of an autonomous electric vehicle or drone, as flexible load 350, navigational commands may be provided to a control system (e.g., electronic control unit (ECU)) of the electric vehicle or drone to automatically guide the autonomous electric vehicle or drone to the scheduled destination.

In an embodiment, the final power schedule may be used by EMS 110 or another system to generate control commands for one or more BES systems 320, power generators 330, charging stations 340, and/or other electrical components of charging infrastructure 140. In particular, EMS 110 may generate a control command and send the control command, via network(s) 120, to the relevant electric component in charging infrastructure 140, which may then execute the received control command. For example, EMS 110 may send a control command to a distributed energy resource (e.g., BES system 320, power generator 330, etc.) to thereby control the distributed energy resource to generate and/or output power during one or more scheduled time periods and not output power outside of the one or more scheduled time periods. As another example, EMS 110 may send a control command to a charging station 340 to thereby control the charging station 340 to output power to a connected flexible load 350 during one or more scheduled time periods and not output power outside of the one or more scheduled time periods.

### 3. Example Usage

Charging infrastructure 140 may comprise an EV depot for charging a fleet of electric vehicles (e.g., operated by a municipal mass transit system, utility company, trucking company, construction company, taxi company, waste management company, etc.), personal electric vehicles, and/or the like, as flexible loads 350. For example, in the case of a municipal mass transit system, such as a bus depot, each electric bus has a route that it must service according to a route schedule. Thus, each electric bus must be charged to at least a sufficient level of charge to complete its scheduled route and must leave the EV depot by a certain time in order to comply with the route schedule.

The disclosed embodiments may be applied to a microgrid comprising one charging infrastructure 140 or a system of two or more distinct charging infrastructures 140. For example, a single EMS 110 may manage the power and charging schedules for a plurality of charging infrastructures 140 (e.g., operated by the same operator). In this case, the charging schedule may encompass charging at charging stations 340 across the plurality of charging infrastructures 140, and the power schedule may encompass power generation in the distributed energy resources across the plurality of charging infrastructures 140. Furthermore, in cases in which a new incoming flexible load 350 may be easily charged at two or more different charging infrastructures 140, the available nodes to be considered by process 400 for the charging location of the new incoming flexible load 350 may include nodes across the two or more charging infrastructures 140.

The disclosed embodiments may select a charging location for an incoming flexible load 350, within one or more charging infrastructures 140, while accounting for voltage ranges of nodes within the distribution network (e.g., in subprocesses 415-425, 445, and 455-465), the charging schedules of flexible loads 350 (e.g., in subprocess 430), the capacity of charging stations 340 (e.g., in subprocesses 435-445), the energy management of distributed energy resources in the distribution network (e.g., in subprocesses 415, 450, and 455), and/or the like. Advantageously, accounting for one or more of these factors helps a charging infrastructure 140 avoid violations of the applicable grid code by maintaining voltage and/or current levels within acceptable limits. In turn, this enables the operator of charging infrastructure 140 to avoid penalties, resulting from violations, and ensure compliance with a schedule of flexible loads 350.

The above description of the disclosed embodiments is provided to enable any person skilled in the art to make or use the invention. Various modifications to these embodiments will be readily apparent to those skilled in the art, and the general principles described herein can be applied to other embodiments without departing from the spirit or scope of the invention. Thus, it is to be understood that the description and drawings presented herein represent a presently preferred embodiment of the invention and are therefore representative of the subject matter which is broadly contemplated by the present invention. It is further understood that the scope of the present invention fully encompasses other embodiments that may become obvious to those skilled in the art and that the scope of the present invention is accordingly not limited.

Combinations, described herein, such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, and any such combination may contain one or more members of its constituents A, B, and/or C. For example, a combination of A and B may comprise one A and multiple B's, multiple A's and one B, or multiple A's and multiple B's.

## Claims

1. A method comprising using at least one hardware processor to, for at least one flexible load to be charged in a distribution network comprising a plurality of nodes, wherein each of the plurality of nodes comprises one or more charging stations:
determine a charging time period associated with the flexible load;
execute a load flow analysis on a model of the distribution network, based on a power schedule for existing loads to be charged in the distribution network during the charging time period;
based on a result of the load flow analysis, determine a charging station at one of the plurality of nodes within the distribution network at which to the charge the flexible load; and
schedule the flexible load to be charged at the determined charging station during the charging time period.

2. The method of Claim 1, further comprising using the at least one hardware processor to control the determined charging station during the charging time period to output power to the flexible load.

3. The method of Claim 1, wherein the flexible load is an electric vehicle, and wherein the distribution network comprises a charging depot for electric vehicles.

4. The method of Claim 1, wherein the result of the load flow analysis comprises an indication of whether or not a voltage violation will occur.

5. The method of Claim 4, wherein the voltage violation is a violation of a grid code that defines voltage requirements that the distribution network must satisfy.

6. The method of Claim 1, further comprising using the at least one hardware processor to, when the result of the load flow analysis indicates that a violation will occur, exclude any of the plurality of nodes, at which the violation will occur, from the determination of the charging station at which to charge the flexible load.

7. The method of Claim 6, wherein the violation comprises an under-voltage.

8. The method of Claim 1, wherein determining the charging time period comprises:
receiving a schedule associated with the flexible load; and
deriving the charging time period from the schedule associated with the flexible load.

9. The method of Claim 8, wherein the flexible load is an electric vehicle, wherein the distribution network comprises a charging depot for electric vehicles, and wherein the schedule associated with the electric vehicle comprises a time by which the electric vehicle is scheduled to depart from the charging depot.

10. The method of Claim 1, wherein determining the charging station at which to charge the flexible load comprises:
determining whether or not the flexible load requires fast charging based on the charging time period; and,
based on the determination of whether or not the flexible load requires fast charging, selecting a charging station as the determined charging station.

11. The method of Claim 10, wherein selecting the charging station comprises, when determining that the flexible load requires fast charging:
determining whether or not at least one fast charging station is available during the charging time period; and,
when determining that at least one fast charging station is available during the charging time period, select a fast charging station, from the at least one fast charging station that is available during the charging time period, as the determined charging station.

12. The method of Claim 11, wherein selecting the fast charging station comprises, when a plurality of fast charging stations are available at two or more of the plurality of nodes, select the fast charging station, at one of the two or more nodes with a highest voltage among the two or more nodes, as the determined charging station.

13. The method of Claim 11, wherein selecting the charging station further comprises, when determining that no fast charging station is available during the charging time period, selecting a charging station, at one of the plurality of nodes with a highest voltage among the plurality of nodes within the load flow analysis, as the determined charging station.

14. The method of Claim 10, wherein selecting the charging station comprises, when determining that the flexible load does not require fast charging, selecting a charging station, at one of the plurality of nodes with a highest voltage among the plurality of nodes within the load flow analysis, as the determined charging station.

15. The method of Claim 1, wherein the distribution network comprises one or more distributed energy resources, and wherein determining the charging station at which to charge the flexible load comprises, in each of one or more iterations, until determining that a violation will not occur,
selecting one of the plurality of nodes at which to charge the flexible load, wherein a different one of the plurality of nodes is selected in each iteration;
executing an economic dispatch for the distribution network;
executing the load flow analysis on the model of the distribution network, based on the power schedule for existing loads to be charged in the distribution network during the charging time period and charging of the flexible load at the selected node; and
determining whether or not the violation will occur based on the load flow analysis.

16. The method of Claim 15, wherein the violation comprises an under-voltage at the selected node.

17. The method of Claim 15, wherein the power schedule comprises setpoints for one or more of the plurality of nodes in the distribution network, and the load flow analysis is performed for each of the setpoints in the power schedule.

18. The method of Claim 15, wherein the one or more distributed energy resources comprise one or more of a photovoltaic power generator, a wind power generator, a fuel cell, a thermal power plant, a hydroelectric power plant, a gasoline-powered generator, or a battery.

19. An energy management system comprising:
at least one hardware processor; and
software configured to, when executed by the at least one hardware processor, for at least one flexible load to be charged in a distribution network comprising a plurality of nodes, wherein each of the plurality of nodes comprises one or more charging stations,
determine a charging time period associated with the flexible load,
execute a load flow analysis on a model of the distribution network, based on a power schedule for existing loads to be charged in the distribution network during the charging time period,
based on a result of the load flow analysis, determine a charging station at one of the plurality of nodes within the distribution network at which to the charge the flexible load, and
schedule the flexible load to be charged at the determined charging station during the charging time period.

20. A non-transitory computer-readable medium having instructions stored thereon, wherein the instructions, when executed by a processor, cause the processor to, for at least one flexible load to be charged in a distribution network comprising a plurality of nodes, wherein each of the plurality of nodes comprises one or more charging stations:
determine a charging time period associated with the flexible load;
execute a load flow analysis on a model of the distribution network, based on a power schedule for existing loads to be charged in the distribution network during the charging time period;
based on a result of the load flow analysis, determine a charging station at one of the plurality of nodes within the distribution network at which to the charge the flexible load; and
schedule the flexible load to be charged at the determined charging station during the charging time period.
